# EUROPEAN PATENT APPLICATION

(11) **EP 4 830 900 A2**
(43) Date of publication of application: **28.10.2026**
(21) Application number: 26174804.0
(22) Date of filing: 27.04.2026
(51) Int. Cl.: B29C 64/118, B29C 64/295, B29C 64/393, B33Y 10/00, B33Y 30/00, B33Y 50/02

(54) **SYSTEMS AND METHODS FOR IMPROVING INTER-LAYER MATERIAL STRENGTH OF MATERIAL EXTRUDED PARTS**

(30) Priority: 25.04.2025 US 202519190167
(71) Applicant: RTX Corporation, Farmington, CT 06032 (US)
(72) Inventor: GARDELL, Benjamin G., Bristol, CT 06010 (US); BINEK, Lawrence A., Glastonbury, CT 06033 (US)
(74) Representative: Dehns

(57) **Abstract**

Apparatus and associated methods relate to improving inter-layer material strength of a three-dimensional, 3D, object (30) created by a material extrusion, MEX, tool (10). Such inter-layer material strength is improved by heating a top layer of material, previously deposited by the MEX tool (10), at a build location, upon which new material is to be deposited. A plurality of lasers (26) fixedly coupled to and distributed about an axis of an extrusion nozzle head (18) of the MEX tool (10) are configured to heat the top layer of material. Each of the plurality of lasers (26) is directed at an oblique angle of incidence to the build location. A controller (28) receives a tool path of the extrusion nozzle head (18). The tool path is indicative of a lateral direction of movement of the extrusion nozzle head (18) relative to the 3D part (30) being fabricated. The controller (28) selectively controls optical power of each of the plurality of lasers (26) based on the tool path received.

## Description

### BACKGROUND

Additive manufacturing, also known as three-dimensional (3D) printing, are processes of adding material to fabricate 3D objects. Additive manufacturing is the opposite of subtractive manufacturing, in which 3D objects are fabricated by selectively removing material from an oversized block of material. For additive manufacturing, the material used to fabricate the 3D objects is provided in a non-rigid form (*e.g.*, a powder form, liquid form, or plastic form) and then solidified or selectively solidified. Various processes of additive manufacturing (*e.g.*, vat photopolymerization, material jetting, binder jetting, powder bed fusion, material extrusion, directed energy deposition, and sheet lamination) have been developed, each with its advantages and disadvantages. Many of these additive manufacturing processes fabricate 3D objects in a layer-by-layer manner.

Layer-by-layer fabrication of 3D objects is enabled by the development of Computer-Aided Design (CAD), which generates CAD models of the objects to be manufactured. These CAD models can be saved in a computer format (*e.g.*, the stereolithography file format or the additive manufacturing file format), which typically are based on triangulations of surfaces of 3D objects. Software then translates the CAD models into layer information of the 3D objects. The software can further translate the layer information into instructions (*e.g.*, a G-code file) tailored to a specific type of additive manufacturing tool used to fabricate the 3D objects.

Material EXtrusion (MEX) is an additive manufacturing process in which the 3D objects are fabricated by extruding small beads, filaments, or streams of material that harden shortly after deposition to form layers. A filament of thermoplastic, metal wire, or other material is fed into an extrusion nozzle head, which heats the material and turns the flow on and off. The 3D objects typically are fabricated upon a build platform with can be movable in a z-direction (*i.e.,* a direction normal to a planar surface of the build platform) with respect to the extrusion nozzle head. The build platform is typically moved in the z-direction so as to maintain a proper working distance between the extrusion nozzle head and a top layer of the 3D object being built. The extrusion head nozzle also can be movable in x-y directions (*i.e.,* directions in the plane of the build platform) with respect to the build platform. Such x-y movement facilitates direction of the filament of material along a tool path of the extrusion nozzle head in fabricating the layers of the 3D objects.

### SUMMARY

According to an aspect of the present invention, there is provided a system for improving inter-layer material strength of a three-dimensional (3D) object created by material extrusion (MEX) tool. The system includes a plurality of lasers configured to be fixedly coupled to and distributed about an axis of the extrusion nozzle head of the MEX tool. Each of the plurality of lasers is directed at an oblique angle of incidence to a build location. The system includes a controller configured to: i) receive a tool path of the extrusion nozzle head; and ii) selectively control optical power of each of the plurality of lasers based on the tool path received.

According to another aspect of the present invention, there is provided a method for improving inter-layer material strength of a three-dimensional (3D) object created by material extrusion (MEX) tool. In the method, a plurality of lasers, which are fixedly coupled to and distributed about an axis of an extrusion nozzle head of the MEX tool, are provided. Each of the plurality of lasers are directed at an oblique angle of incidence to a common build location. A tool path of the MEX tool is received by a controller. Optical power of each of the plurality of lasers is controlled based on the tool path received by the controller.

The following optional features may be applied to any of the above aspects.

Optionally, and in accordance with any of the above, the plurality of lasers can be distributed in a substantially uniform fashion about the axis of the extrusion head.

Optionally, and in accordance with any of the above, the plurality of lasers can be distributed about the axis of the extrusion nozzle head of the MEX in substantially uniform intervals that are within five degrees with respect to one another.

Optionally, and in accordance with any of the above, the plurality of lasers can include three lasers distributed at about 120-degree intervals about the axis of the extrusion nozzle head.

Optionally, and in accordance with any of the above, the plurality of lasers can include four lasers distributed at about 90-degree intervals about the axis of the extrusion nozzle head.

Optionally, and in accordance with any of the above, the radial distance between the axis of the extrusion nozzle and each of the plurality of lasers can be substantially equal with one another.

Optionally, and in accordance with any of the above, the axis of the extrusion nozzle head can define z directions parallel with the axis of the extrusion head nozzle and x-y directions perpendicular to the axis of the extrusion nozzle head.

Optionally, and in accordance with any of the above, each of the plurality of lasers can be directed to intercept one another at the build location, which is directly below and on the axis of the extrusion head nozzle.

Optionally, and in accordance with any of the above, the oblique angle of incidence can be measured with respect to the axis of the extrusion head nozzle.

Optionally, and in accordance with any of the above, the oblique angle of incidence can be between 30 and 75 degrees.

Optionally, and in accordance with any of the above, the oblique angle of incidence can be between 45 and 60 degrees.

Optionally, and in accordance with any of the above, each of the plurality of lasers can be configured to heat a top layer of the 3D object at the build location, upon which new material is to be deposited by the extrusion nozzle head.

Optionally, and in accordance with any of the above, the controller can be further configured to determine which of the plurality of lasers is directed most nearly antiparallel with a direction of lateral movement of the extrusion nozzle head.

Optionally, and in accordance with any of the above, the controller can be further configured to activate an activated one of the plurality of lasers that is determined to be directed most nearly antiparallel with the direction of lateral movement of the extrusion nozzle head.

Optionally, and in accordance with any of the above, the controller can be further configured to deactivate each of the plurality of lasers that is not determined to be directed most nearly antiparallel with the direction of lateral movement of the extrusion nozzle head.

Optionally, and in accordance with any of the above, the controller can be further configured to control the optical power of an activated one of the plurality of lasers based on a location of the 3D part with respect to the build location.

Optionally, and in accordance with any of the above, the controller can be further configured to control a beam shape of an activated one of the plurality of lasers based on a location of the 3D part with respect to the build location.

Optionally, and in accordance with any of the above, the system can further include a temperature sensor configured to measure temperature of a top layer of the 3D object at the build location, upon which new material is to be deposited by the extrusion nozzle head.

Optionally, and in accordance with any of the above, the controller can be further configured to selectively control optical power of each of the plurality of lasers based, at least in part, on the temperature measured by the temperature sensor.

Optionally, and in accordance with any of the above, the plurality of lasers are directed at an oblique angle of incidence to a normal vector of a build platform of the MEX tool.

Optionally, and in accordance with any of the above, the tool path is indicative of a lateral direction of movement of the extrusion nozzle head relative to the 3D part being fabricated.

### BRIEF DESCRIPTION OF THE DRAWINGS

FIG. 1 is a schematic view of a 3D object being fabricated by MEX tool equipped with a laser configured to improve inter-layer material strength.
FIGS. 2A-2C are a side view, a perspective view, and a plan view of a MEX tool equipped with lasers configured to improve inter-layer material strength.
FIG. 3 is a flow chart of a method for improving inter-layer material strength.
FIG. 4 is a flow chart of a method of depositing subsequent layers using laser heating of previously deposited material.

### DETAILED DESCRIPTION

Apparatus and associated methods relate to improving inter-layer material strength of a three-dimensional (3D) object created by a material extrusion (MEX) tool. Such inter-layer material strength is improved by heating a top layer of material, previously deposited by the MEX tool, at a build location, upon which new material is to be deposited. A plurality of lasers fixedly coupled to and distributed about an axis of an extrusion nozzle head of the MEX tool are configured heat the top layer of material. Each of the plurality of lasers is directed at an oblique angle of incidence to the build location. A controller receives a tool path of the extrusion nozzle head. The tool path is indicative of a lateral direction of movement of the extrusion nozzle head relative to the 3D part being fabricated. The controller selectively controls optical power of each of the plurality of lasers based on the tool path received.

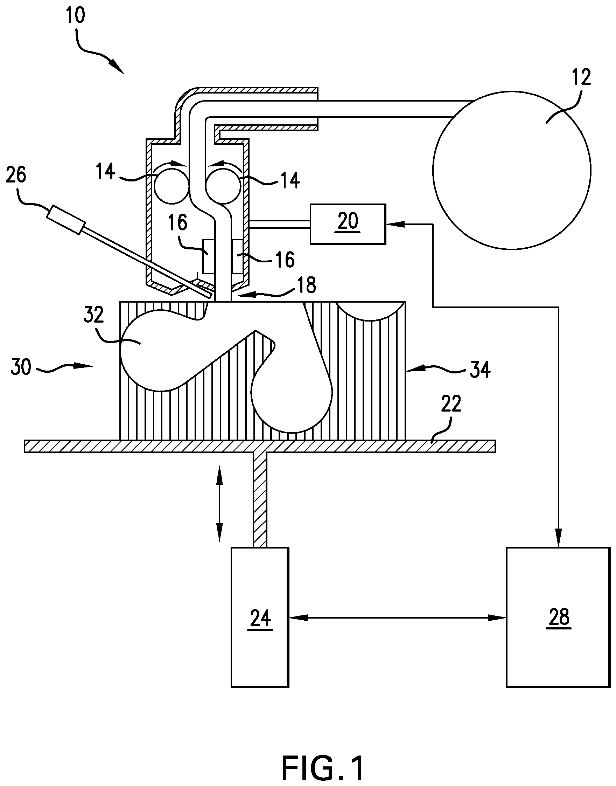

FIG. 1 is a schematic view of a 3D object being fabricated by MEX tool equipped with a laser configured to improve inter-layer material strength. In FIG. 1, MEX tool 10 includes feedstock supply 12, filament extruder 14, material heater 16, extrusion nozzle head 18, nozzle positioning system 20, build platform 22, piston 24, lasers 26, and controller 28. MEX tool 10 is depicted as fabricating a 3D object 30, which has a complex geometry. 3D object 30 includes final structure 32 and temporary support members 34, which can be removed from final structure 32 after 3D object 30 has been fully fabricated.

Fabrication of 3D object 30 begins with controller 28 receiving instructions to build 3D object 30. Such instruction can include, for example, a tool path and material delivery rates, which will be described below. The tool path can be indicative of movements of extrusion nozzle head 18 relative to build platform 22 in the fabrication of 3D object 30. Such movements can include vertical relative movements (*i.e.,* z direction movements), which are used to progress from one layer to the next layer, as well as lateral relative movements (*i.e.,* movements is x-y directions) along which extrusion nozzle head 18 moves in creating each of the individual layers. Moreover, such lateral relative movements (hereinafter "lateral movements") of extrusion nozzle head 18 with respect to build platform 22 can include rates of lateral movements as well as directions (*e.g.*, in an x-y plane) of the lateral movements. Material delivery rates are synchronized with the tool path, so that material is delivered only at locations where it is to be deposited. Such material delivery rates can be binary, or otherwise. For example, delivery rate instructions can be either: i) whether to deliver or not to deliver material at each relative location of extrusion nozzle head 18; or ii) what rate of material delivery for each relative location of extrusion nozzle head 18.

After receiving instructions for building 3D object 30, controller 28 position build platform 22 and extrusion nozzle head 18 to starting locations for fabricating a first layer of 3D object 30. For example, controller 28 causes piston 24 to move build platform 22 in a z direction to position a top of build platform 22 at a proper working distance from extrusion nozzle head 18. Controller 28 also causes the nozzle positioning system 20 to move extrusion nozzle head 18 in x-y directions relative to build platform 22 to laterally position extrusion nozzle head 18 at the starting location of the tool path. Then, controller 28 causes the material to be deposited and the extrusion nozzle head to be moved in a synchronized fashion so as to build a first layer of 3D object 30. To deposit the material, feedstock supply 12 is caused to supply the material to material heater 16 and extrusion nozzle head 18. Material heater 16 heats the material supplied thereto, typically softening the material. Extrusion nozzle head 18 then extrudes the heated material onto build platform 22 at whatever x-y location of build platform 22 at which extrusion nozzle head 18 is located. The heated material cools after being delivered, by extrusion, onto build platform 22 by extrusion nozzle head 18. Upon cooling, the material typically hardens or solidifies.

Controller 28 controls and synchronizes such delivery of material with x-y movement of extrusion nozzle head 18 relative to build platform 22. To pass over a gap where no material is to be deposited for the current layer of 3D object 30, controller 28 can turn off delivery of the material while causing extrusion nozzle head 18 to move past such a gap. By synchronizing relative movement of extrusion nozzle head 18 with respect to build platform 22 with material delivery, complex features can be created for each layer of 3D object 30. After each layer has been completed, controller 28 repositions build platform 22 and extrusion nozzle head 18 to a starting location for fabricating a next layer of 3D object 30. The controller then creates each next layer upon an immediately preceding layer, which has cooled and hardened or solidified. Adhesion of these next layers to the underlying layers upon which they have been formed can be relatively modest (*i.e.,* less than a material strength that results from heating of the underlying layers) due to the difference in temperatures of these two adjacent layers. Thus, the material strength in the z direction (*i.e*., normal directions to the layers) at interfaces between adjacent layers can be reduced in comparison with the material strength in x-y directions (*i.e.,* lateral directions in the planes of the layers).

To improve such adhesion between adjacent layers, heating of the underlying layer is performed at the build location where new material is being deposited. Such heating can be designed to soften the material of the underlying layer for improved adhesion thereto. To perform such heating lasers 26 are fixedly coupled to and distributed about axis *A* of extrusion nozzle head 18. Because lasers 26 are fixedly coupled to extrusion nozzle head 18, lasers 26 remain in a fixed position relative to extrusion nozzle head 18. Each of lasers 26 is directed at an oblique angle of incidence to the build location (*i.e*., an oblique angle of incidence to a normal vector of the build platform), which is directly below and on axis *A* of extrusion nozzle head 18. At such a build location, the new material being extruded by extrusion nozzle head 18 will be deposited. Optical power emitted by lasers 26 will then cause heating of the underlying layer at the build location. Because the material extruded from extrusion nozzle head 18 results in a filament of material suspended by extrusion nozzle head 18 and tailing in a direction opposite that of the direction of lateral movement of extrusion nozzle head 18, the filament can be at a location obscuring one or more of lasers 26 from the build location. For example, depending on the direction of lateral movement, the filament suspended by extrusion nozzle head 18 can be interposed between one of more of lasers 26 and the build location. As such, the optical power emitted by any lasers 26 obscured by the filament would be incident on the filament instead of upon the underlying layer of material at the build location. Such oblique angles of incidence can be between 30 and 75 degrees, or between 45 and 60 degrees, for example.

To address such filament interposition conditions, two lasers 26 are employed and distributed about extrusion nozzle head 18 on opposite sides thereof. Because lasers 26 are distributed about extrusion nozzle head 18, at least one of lasers 26 will not be blocked from heating the underlying layer at the build location by the filament of material suspended by extrusion nozzle head 18. Thus, by selective activation of lasers 26, the underlying layer of material at the build location can be heated, regardless of the direction of lateral movement of extrusion nozzle head 18. To select which of lasers 26 should be activated for heating of the underlying layer of material at the build location, controller 28 can be configured to determine which of lasers 26 is directed most nearly antiparallel with a direction of lateral movement of the extrusion nozzle head (*i.e.,* in a direction nearest to 180 degrees to that of the direction of lateral movement). Controller 28 can then activate an activated one of lasers 26 that is determined to be directed most nearly antiparallel with the direction of lateral movement of the extrusion nozzle head 18. Controller 28 can also deactivate a deactivated one of lasers 26 that is not determined to be directed most nearly antiparallel with the direction of lateral movement of the extrusion nozzle head 18. As extrusion nozzle head 18 moves in the direction of lateral movement, the filament will contact the heated location of the underlying layer of material and adhere well thereto. In some instances, however, more than two lasers 26 can provide even better selection for heating of the material of the underlying layer.

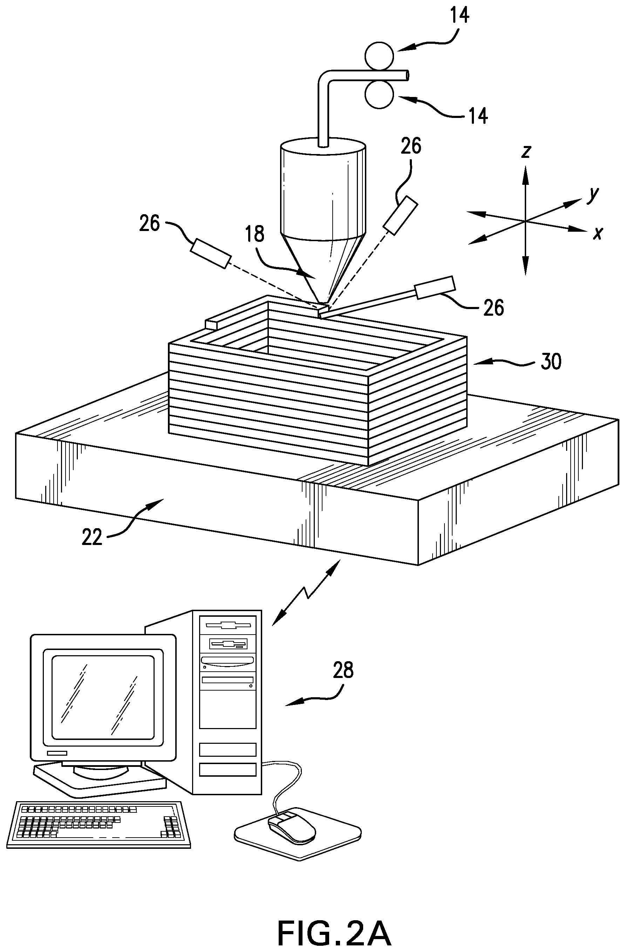

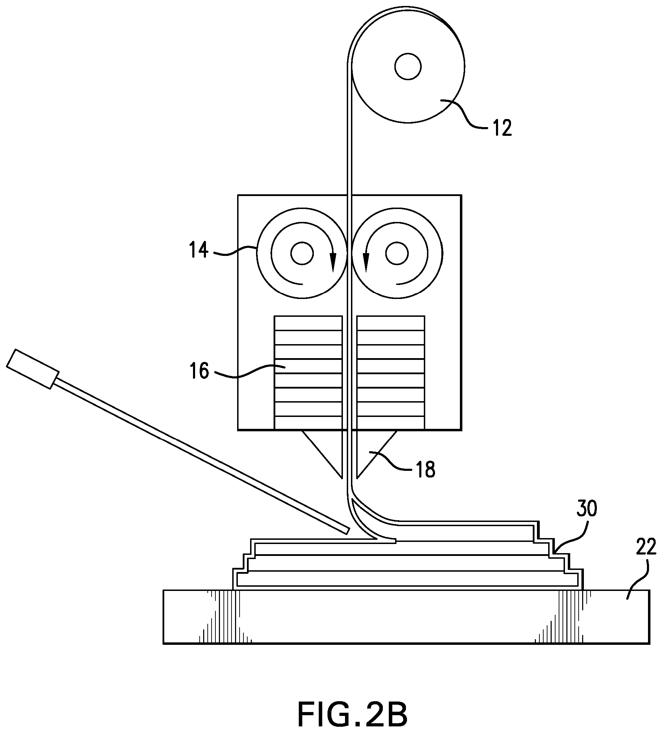

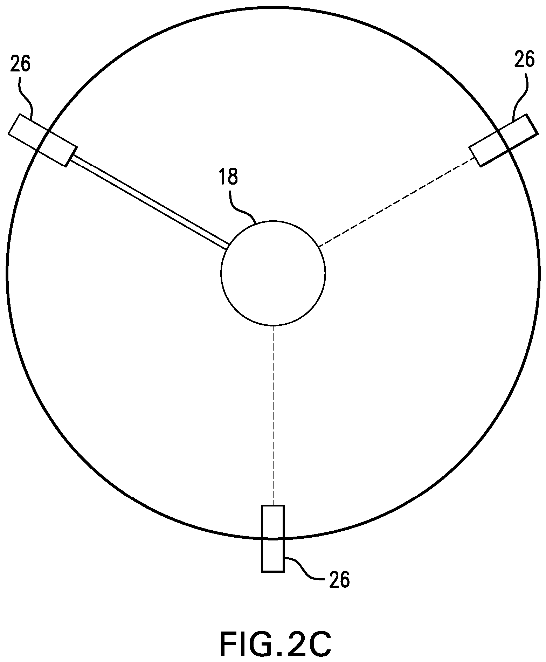

FIGS. 2A-2C are a side view, a perspective view, and a plan view of a MEX tool equipped with lasers configured to improve inter-layer material strength. In FIG. 2, MEX tool 10 includes feedstock supply 12, filament extruder 14, material heater 16, extrusion nozzle head 18, nozzle positioning system 20, build platform 22, piston 24, lasers 26, and controller 28. In the depicted embodiment, three lasers 26 are distributed at 120-degree intervals about the axis *A* of extrusion nozzle head 18. In another embodiment, four lasers 26 can be distributed at 90-degree intervals about the axis *A* of extrusion nozzle head 18. By distributing lasers 26 about extrusion nozzle head 18 in a substantially uniform fashion (*i.e.,* intervals are within 5 degrees with one another), selection of which laser to use for heating can be simplified. By distributing more lasers about the axis A of extrusion nozzle head 18, heating can be provided not only to the material of the underlying layer, but also to sidewalls of material previously deposited in a next layer that is being deposited thereon. For example, if the tool path instructs extrusion nozzle head 18 to sequentially lay down two adjacent stripes of material, the stripe that is first laid down will have sidewalls to which the second stripe will abut. By heating both the underlying layer and the sidewalls at the deposit location, newly extruded material will adhere well, both vertically and laterally. Locally increasing the temperature of the previous MEX tool path using a plurality of lasers 26 improves the anisotropic nature of the material resulting in a more robust component. In such an embodiment, controller 28 can be configured to activate an activated one of lasers 26 based, at least in part, on previously deposited adjacent material to the build location.

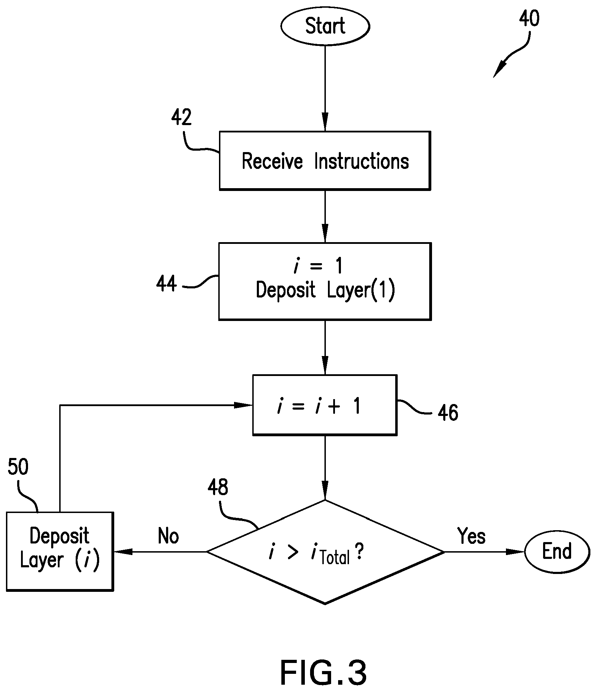

FIG. 3 is a flow chart of a method for improving inter-layer material strength. In FIG. 3, method 40 is described from a vantage point of controller 28, as shown in FIGS. 1 and 2A. Method 40 begins at step 42, where controller 28 receives instructions to build a 3D object, such as 3D object 30 shown in FIG. 1. Then, method 40 advances to step 44, where controller 28 sets the layer index i to one and deposits material to fabricate the first layer of the 3D object. This first layer is fabricated without using lasers 26 to heat an underlying layer, as not underlying layer has been yet fabricated. Method 40 then advances to step 46 where controller 28 increments the layer index i. Then, at step 48, controller 28 compares layer index i with a total number of layers iₜₒₜₐₗ that will be deposited to fabricate the 3D object. If, at step 48, layer index i is not greater than the total number of layers iₜₒₜₐₗ, then method 40 advances to step 50, where controller 28 deposits material to fabricate the layer of the 3D object that corresponds to the layer index i. This layer is fabricated using lasers 26 to heat an underlying layer, as no underlying layer has been yet fabricated. Method 40 then returns to step 48, where controller 28 again increments the layer index i. If, however, at step 48, layer index i is greater than the total number of layers iₜₒₜₐₗ, then method 40 ends.

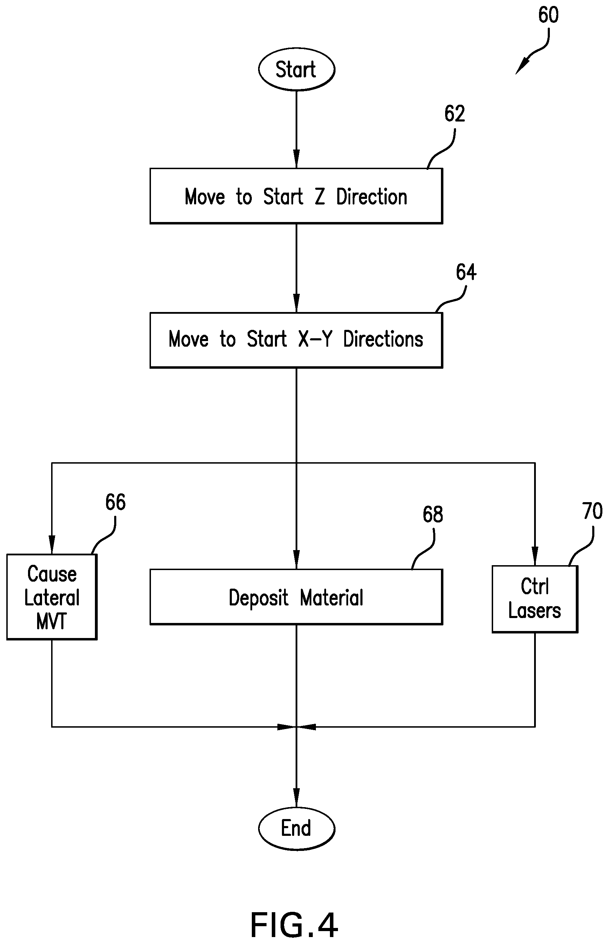

FIG. 4 is a flow chart of a method of depositing subsequent layers using laser heating of previously deposited material. In FIG. 4, method 60 describes step 50 of method 40, which is depicted in FIG. 3, in more detail. Method 60 is again described from a vantage point of controller 28, as shown in FIGS. 1 and 2A. Method 60 begins at step 62, where controller 28 causes piston 24 to move build platform 22 in a z direction so as to position the top surface of the last layer (*i.e.,* the layer corresponding to the last layer index i-1) to be located at a proper working distance from extrusion nozzle head 18. Method 60 then advances to step 64, where controller 28 causes the nozzle positioning system 20 to move extrusion nozzle head 18 in x-y directions relative to build platform 22 so as to laterally position extrusion nozzle head 18 at the starting location of the tool path for the layer to be deposited next (*i.e.,* the layer corresponding to the current layer index i). Method 60 then advances to each of coordinated steps 66, 68, and 70, in which controller 28 synchronously controls lateral movement of extrusion nozzle head 18, material deposition, and operation of lasers 26, respectively.

In step 66, controller 28 causes nozzle positioning system 22 to laterally move extrusion nozzle head 18 along the tool path corresponding to the current layer corresponding to current layer being deposited (*i.e.*, the layer corresponding to the current layer index i). Various parameters of such lateral movement can be controlled by controller 28. For example, controller 28 can control both rate and direction of lateral movement of extrusion nozzle head 18.

In step 68, controller 28 controls the deposition of the material being used to create the current layer. Various parameters of material deposition can be controlled by controller 28. For example, controller 28 can control the volumetric flow rate of the material being deposited. Such a volumetric flow rate can be controlled between and including no flow to a maximum volumetric flow rate. In some embodiments, controller 28 can select from a plurality of materials that can be used to fabricate the current layer.

In step 70, controller 28 determines which of lasers 26 is/are directed in a direction(s) that will beneficially heat previously deposited material at the built location to improve adhesion of the material to be deposited there. Such a selection can be based on such things as directions of lateral movements, presence of material sidewalls at the build location, and/or calculations corresponding to thermal conduction away from the build location.

Regarding directions of lateral movements, controller 28 can be configured to select one or more lasers 26 that are direct most nearly antiparallel with the direction of lateral movement of the extrusion nozzle head 18 (*i.e.,* selected lasers 26 that are fixedly located on a side of the 3D object toward which extrusion nozzle head 18 is laterally moving). Such lasers 26 will not be obscured from the build location by a trailing tail of the filament being extruded from extrusion nozzle head 18. Controller 28 can also control beam strength and/or beam shape of the selected lasers to provide proper heating of the previously deposited material at the build location. Considerations for determining the optical power can include relative direction(s) of selected laser with respect to the direction of lateral movement, for example.

Regarding presence of material sidewalls at the build location, controller 28 can be configured to select one or more lasers 26 that are directed in a manner(s) that their beams can be incident upon faces of the sidewalls adjacent to the build locations. Such sidewalls can result from material of the current layer that has been previously deposited. Such selected lasers 26 can be those that are direct most nearly antiparallel with a normal vector of the sidewalls located adjacent to the build location (*i.e.,* selected lasers 26 that are fixedly located on a side of the 3D object opposite the sidewall). Controller 28 can also control beam strength and/or beam shape of the selected lasers to provide proper heating of the previously deposited material at the build location. Considerations for determining the optical power can include relative direction(s) of selected laser with respect to the sidewall adjacent to the build location, for example.

Regarding calculations corresponding to thermal conduction away from the build location, controller 28 can control optical power to provide the proper amount of heating of the previously deposited layers. Such optical-power control can involve selection of one or more lasers, control of beam strength, and/or control of beam shape. For example, for build locations at which thermal conduction away therefrom is great (*e.g*., build locations coincident with a large mass of previously deposited material), controller 28 can increase the optical power directed thereto. For build locations at which thermal conduction away therefrom is not great (*e.g.,* the build location coincident with a small mass of previously deposited material), controller 28 can reduce the optical power directed thereto.

In some embodiments, MEX tool 10 includes a temperature sensor configured to measure temperature of the top layer of the 3D object at the build location, upon which new material is to be deposited by extrusion nozzle head 18. For example, a non-contacting temperature sensor can be directed or focused upon the build location. An infrared thermographic temperature sensor, for example, can be directed or focused at the build location. Controller 28 can then control optical power in a closed loop fashion using such a temperature sensor to heat the previously deposited material to a desired temperature. Steps 66, 68, and 70 are synchronously performed by controller 28 in a coordinated fashion. After the current layer has been completed, method 60 ends.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A system for improving inter-layer material strength of a three-dimensional, 3D, object (30) created by a material extrusion, MEX, tool (10), the system comprising:
a plurality of lasers (26) configured to be fixedly coupled to and distributed about an axis of an extrusion nozzle head (18) of the MEX tool (10), each of the plurality of lasers (26) directed at an oblique angle of incidence to a build location; and
a controller (28) configured to:
receive a tool path of the extrusion nozzle head (18); and
selectively control optical power of each of the plurality of lasers (26) based on the tool path received.

2. The system of claim 1, wherein the plurality of lasers (26) are distributed in a substantially uniform fashion about the axis of the extrusion nozzle head (18).

3. The system of claim 2, wherein the plurality of lasers (26) are distributed about the axis of the extrusion nozzle head (18) of the MEX (10) in substantially uniform intervals that are within five degrees with respect to one another.

4. The system of claim 3, wherein:
the plurality of lasers (26) includes three lasers (26) distributed at about 120-degree intervals about the axis of the extrusion nozzle head (18); or
the plurality of lasers (26) includes four lasers (26) distributed at about 90-degree intervals about the axis of the extrusion nozzle head (18).

5. The system of any preceding claim, wherein the radial distance between the axis of the extrusion nozzle head (18) and each of the plurality of lasers (26) is substantially equal with one another.

6. The system of any preceding claim, wherein the axis of the extrusion nozzle head (18) defines z directions parallel with the axis of the extrusion nozzle head (18) and x-y directions perpendicular to the axis of the extrusion nozzle head (18).

7. The system of any preceding claim, wherein each of the plurality of lasers (26) is directed to intercept one another at the build location, which is directly below and on the axis of the extrusion head nozzle (16).

8. The system of any preceding claim, wherein the oblique angle of incidence is measured with respect to the axis of the extrusion head nozzle (16).

9. The system of any preceding claim, wherein:
the oblique angle of incidence is between 30 and 75 degrees; or
the oblique angle of incidence is between 45 and 60 degrees.

10. The system of any preceding claim, wherein each of the plurality of lasers (26) is configured to heat a top layer of the 3D object (30) at the build location, upon which new material is to be deposited by the extrusion nozzle head (18).

11. The system of any preceding claim, wherein the controller (28) is further configured to:
determine which of the plurality of lasers (26) is directed most nearly antiparallel with a direction of lateral movement of the extrusion nozzle head (18).

12. The system of claim 11, wherein the controller (28) is further configured to:
activate one of the plurality of lasers (26) that is determined to be directed most nearly antiparallel with the direction of lateral movement of the extrusion nozzle head (18); and/or
deactivate each of the plurality of lasers (26) that is not determined to be directed most nearly antiparallel with the direction of lateral movement of the extrusion nozzle head (18).

13. The system of any preceding claim, wherein the controller (28) is further configured to:
control the optical power of an activated one of the plurality of lasers (26) based on a location of the 3D part (30) with respect to the build location; and/or
control a beam shape of an activated one of the plurality of lasers (26) based on a location of the 3D part (30) with respect to the build location.

14. The system of any preceding claim, further comprising:
a temperature sensor configured to measure temperature of a top layer of the 3D object (30) at the build location, upon which new material is to be deposited by the extrusion nozzle head (18),
wherein, optionally, the controller (28) is further configured to:
selectively control optical power of each of the plurality of lasers (26) based, at least in part, on the temperature measured by the temperature sensor.

15. A method for improving inter-layer material strength of a three-dimensional, 3D, object created by a material extrusion, MEX, tool (10), the method comprising:
providing a plurality of lasers (26) fixedly coupled to and distributed about an axis of an extrusion nozzle head (18) of the MEX tool (10);
directing each of the plurality of lasers (26) at an oblique angle of incidence to a build location; receiving, via a controller (28), a tool path of the MEX tool (10); and
selectively controlling, via the controller (28), an optical power of each of the plurality of lasers (26) based on the tool path received.
